## Europäisches Patentamt

## European Patent Office

## Office européen des brevets

(11) Veröffentlichungsnummer: **0 129 504**
**A1**

(12) **EUROPÄISCHE PATENTANMELDUNG**

(21) Anmeldenummer: **84810191.1**

(22) Anmeldetag: **18.04.84**

(51) Int. Cl.³: **A 01 K 57/00**
**A 01 M 1/06**

(30) Priorität: **21.04.83 CH 2140/83**

(43) Veröffentlichungstag der Anmeldung:
**27.12.84 Patentblatt 84/52**

(84) Benannte Vertragsstaaten:
**AT BE CH DE FR GB IT LI LU NL SE**

(71) Anmelder: **Reider, Ferenc**
**Lutertalstrasse 66**
**CH-3065 Bolligen(CH)**

(72) Erfinder: **Reider, Ferenc**
**Lutertalstrasse 66**
**CH-3065 Bolligen(CH)**

(54) **Verfahren und Vorrichtung zum Einfangen von Hautflügler-Insekten, insbesondere Bienen, und zur Bevölkerung von Bienen-Begattungskästen.**

(57) Die sehr elastischen Körper der Bienen und Hautflügler-Insekten machen es möglich, dass man sie mit Hilfe eines Gebläses in einen Behälter einsaugt, und hernach in die gewünschte Beute bläst, oder sie direkt in ein Begattungs-kästchen einsaugt. Hat man die Bienen in einem Behälter, kann man sie für verschiedene Zwecke verwenden.
Die Leistung des Gebläses ist regulierbar.

Fig 2

Fig 1

EP 0 129 504 A1

Beschreibung
---------------

Einfaches Einfangen von Hautflügler-Insekten, insbesondere
Bienen - sowie die rationelle Bevölkerung der Bienen-Begattungskästchen und der dazu dienenden Vorrichtung.


Bisher hat man auf die Begattungs -Zucht oder Ablegerkasten
einen grossen Trichter aufgesetzt, die Wabe mit Hilfe einer
Zange in einer Hand gehalten, und die Bienen mit einer Gänsefeder in den Trichter gewischt. Ein Teil der Bienen rutschte
durch den Trichter in den Kasten, die flugfähigen Bienen flogen meist weg. So konnte man hauptsächlich nur Jungbienen
hineinwischen. Die Bienen wurden immer nervöser und stechlustiger. Der Geruch des Bienengiftes reizte sie noch weiter
zum Stechen, und darum wurde bei den meisten Imkern mit dem
Schutzanzug gearbeitet. Meist bei sommerlicher Hitze. Bei unvorsichtiger Handhabung fielen Bienen auf den Boden. Sie
Kletterten herum, und ein Teil davon wurde zertreten oder zerdrückt, und das erschwerte die Arbeit. Ausserhalb des Bienenhauses wurden die Bienen oft staubig und flugunfähig. So
gingen viele unnötig zugrunde.
Da eine Wabe je nach Grösse zwischen 2 - $3\frac{1}{2}$ kg wiegt, ist
das Abfüllen einer Vielzahl von Begattungskasten körperlich
recht anstrengend. Hauptsächlich der Rücken wurde beim Abfüllen mehrerer Völker stark ermüdet. Befand sich zwischen
Begattungskästli und Trichter ein Drohnensieb, musste man
mit Hilfe des Rauches die Bienen hineintreiben. Dies verlängerte den ganzen Vorgang. Ausserdem war die abgefüllte
Bienenmenge bei den bisherigen Begattungskasten nicht zu
sehen, sondern nur abzuschätzen.
Die sehr elastischen Körper der Bienen ermöglichen es, sie
mit der Vorrichtung einzusaugen und auszutreiben. Die Bienen
benehmen sich viel ruhiger, man kann die Arbeit viel leichter
und bequemer ausführen, viele Imker können so auf den Schleier
verzichten. Die Bienenmenge ist ständig kontrollierbar. Es
ermöglicht ein schnelles Arbeiten; dies ist ausserhalb des
Bienenhauses (Räubergefahr durch fremde Bienen ) besonders
wichtig.
Da das Einsaugen und Abfüllen serienmässig vor sich geht,
kann man sehr speditiv arbeiten und ermüdet weniger.

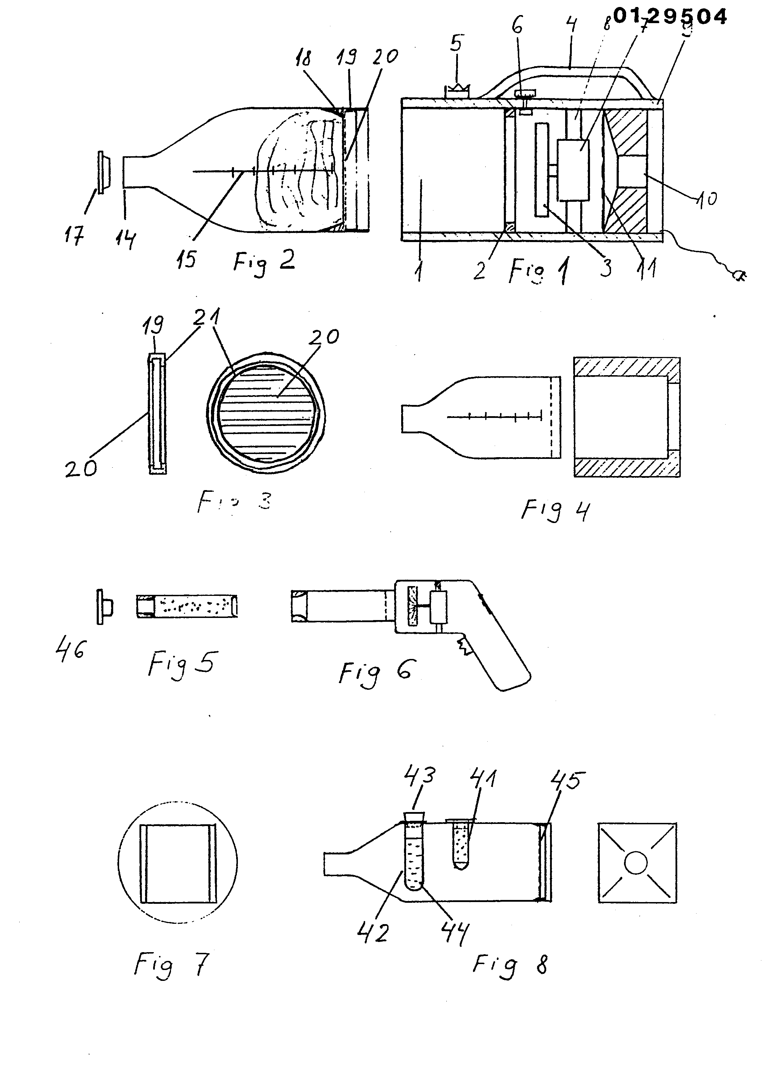

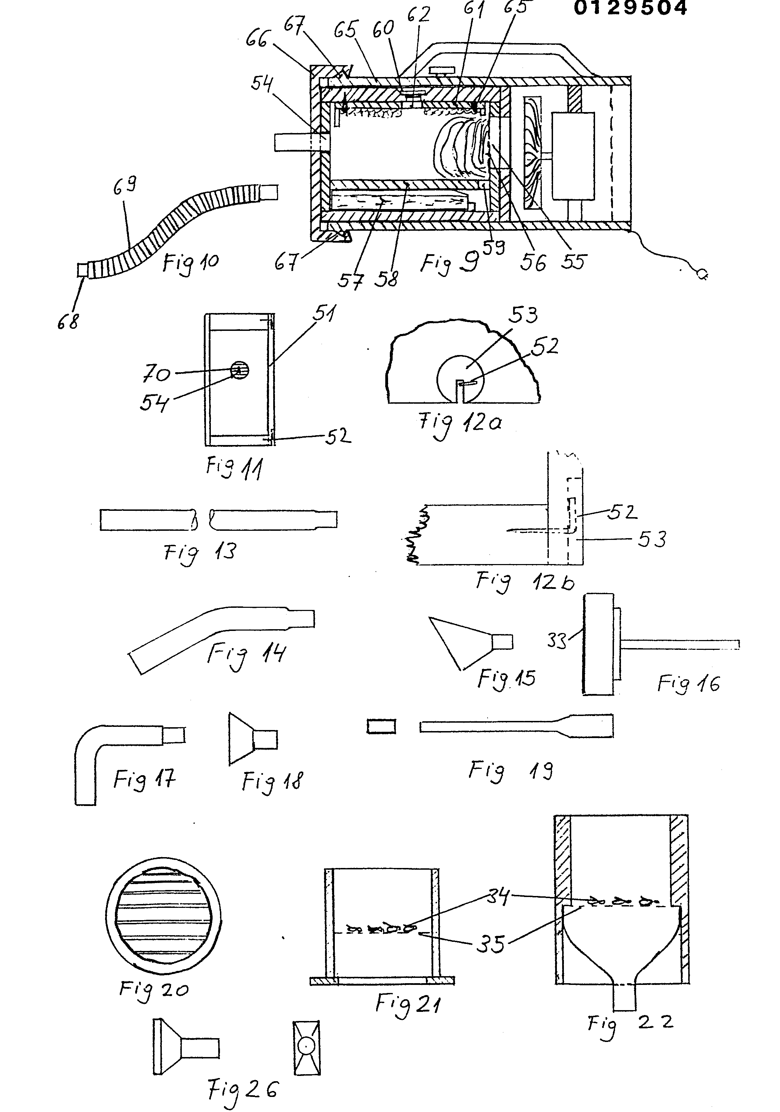

Die S a u g v o r r i c h t u n g  Fig. 1, ist aus Plastic, und die weite Anschluss-Stütze 1, in die der gut
passende Zwischenbehälter Fig.2 eingesteckt wird, ist
durchsichtig. Der Ring 2 verhindert, dass der Behälter Fig.2 Richtung Ventil 3 rutscht.
In der Nähe des Griffes 4 ist der dreistellige Schalter 5 angebracht, mit dem die Vorrichtung auf SAUGEN -
BLASEN - oder AUS geschaltet werden kann. Direkt neben dem Griff 4 befindet sich der elektrische Regler 6,
den man mit dem Daumen bedienen kann. Damit ist die
Saug- und Blaskraft leicht zu regulieren. Der Motor 7
ist mit dem Plastic-Halterungsstern 8 an der Plasticröhre 9 befestigt.
Zwischen Motor 7 und der engeren Anschlus-Stütze 10, ist
ein Gitter 11 angebracht. Die engere Anschluss-Stütze
dient zum Anschluss des Behälters Fig.2 mit der engeren
Oeffnung 14. Die Saugvorrichtung funktioniert mit 12 Volt,
Gleichspannung, und ist somit an jeden Autoakkumulator
anschliessbar.


Der B e h ä l t e r  Fig.2 ist aus Plastic, durchsichtig, rund, innen hat er eine glatte Oberfläche, die
Form ist in die Länge gezogen - ohne scharfe Kanten.
Aussen ist er beschriftbar, und mit einer Skala 15 versehen zum Ablesen der Bienenmenge, calibriert in Deziliter und Gramm. Die kleine Oeffnung ist mit einem einfachen Stopfen 17 verschliessbar.
Innen an der weiten Oeffnung sind Anschlag-Nocken 18
angebracht, am Ende der Oeffnung mit Rillen 19 versehen,
welche ermöglichen, dass der mit Sperrnetz 20 versehene
Abschlussdeckel Fig.3 welcher ebenfalls mit Rillen 19
versehen ist, gut abdichtet. Die Rippen 21 ermöglichen
das einfache Wegnehmen.
Bei der einfacheren Ausführung ist der Behälter mit
einem festen Sperrnetz versehen; dessen Maschen richten
sich nach der Grösse der Insekten. So ein Behälter ist
noch einfacher und billiger - eine Art Einweg-Behälter.

Um kleinere Behälter einstecken zu können, verwendet man
ein durchsichtiges Zwischenstück Fig.4.

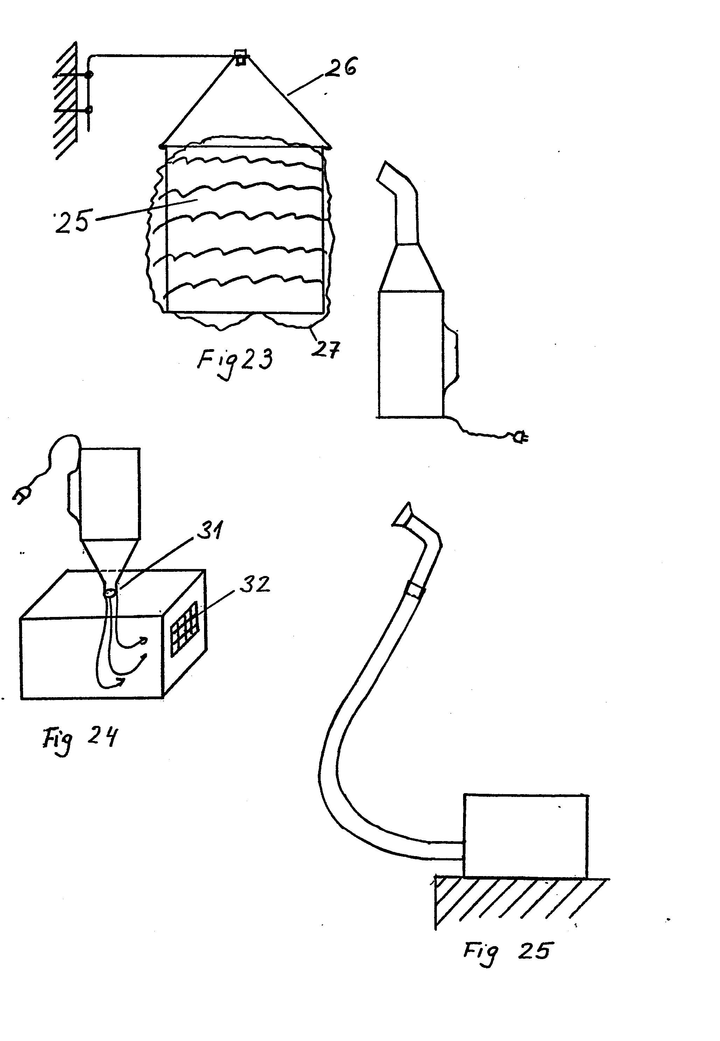

**Einfangen von Bienen direkt ab Waben Fig.23.**

Eine gut besetzte Wabe 25 wird etwa auf Kopfhöhe in den
Wabenhalter 26 eingehängt. Man lässt die Bienen sich
sättigen. Währenddessen fliegen die alten Flugbienen zum
grössten Teil weg. Der Zwischenbehälter wird bis zum Anschlagring hineingeschoben, und das gekrümmte Rohr wird
angesteckt, der Apparat eingeschaltet.
Das Einsaugen der Bienen beginnt, und die Saugkraft wird
mit Hilfe des Reglers in Richtung Maximum gedreht. Die
Dichte der einströmenden Bienen zeigt die richtige Saugkraft an. Meist befinden sich hängende Trauben aus Bienen 27 am unteren Teil des Rahmens, hier beginnt man mit
dem Einfangen, weil es da am leichtesten ist. Die eingesaugte Bienenmenge ist mit Hilfe der am Behälter angebrachten Skale (-welche in Dezibel oder Gramm kalibriert ist -)
in der Praxis mit ziemlicher Genauigkeit ablesbar. Ist die
gewünschte Bienenmenge erreicht, wird der Apparat ausgeschaltet, der Behälter mit Stopfen verschlossen, weggenommen, und liegend zur Seite gelegt.
Befinden sich noch wenig Bienen an der Wabe, und will man
diese ganz bienenfrei machen, kann man die verbleibenden
Bienen mit Hilfe eines der Gänsefeder nachgebildeten Plastics Richtung Einsaugrohr lenken. Die Saugkraft des Motors
wird etwas verstärkt, und die restlichen Bienen können
leicht eingesaugt werden. Man führt den Apparat paralell
zu den Wabenflächen weil man so das bessere Gefühl für die
Arbeit hat. So kann man einfach und rationell Bienen einfangen, in Serie eine Vielzahl von Behältern mit Bienen
abfüllen, und diese dann für verschiedene Zwecke verwenden.

Da praktisch jeder Begattungskasten oben ein Loch 31 für das Zusetzen der Königin und ein Sperrnetz 32, welches der Belüftung der eingesperrten Bienen dient aufweist, wird das Einblasen der Bienen aus dem Behälter möglich. Der Behälter wird mit seiner engeren Mündung direkt in das Zusetzloch gesteckt. Wenn das Zusetzloch zu klein ist, wird eine Vorsatzröhre (mit engerer Endung) zu Hilfe genommen, die Vorrichtung auf BLASEN umgeschaltet, und die Bienen in den Begattungskasten geblasen. Ist der Begattungskasten besonders klein (kleine 1-Wabenkästchen) wird das Einblasen durch ein gekrümmtes Rohr Fig.17 vorgenommen. Dadurch wird die Geschwindigkeit der einströmenden Bienen vermindert, und deren Landung im Kasten gestaltet sich sanfter.

Die Bienen können gleich nach dem Einsaugen in die bereitgestellten Begattungskasten eingeblasen werden. Weil jedes bevölkerte Begattungskästchen sowieso zuerst für 2-5 Tage in einem dunklen Raum aufbewahrt werden soll, ist es rationeller, die abgefüllten Behälter in den Keller zu transportieren, und die Bienen in die nebeneinander aufgestellten Begattungskästchen einzublasen. Der Transport einer Vielzahl zusammengebundener Behälter ist leichter zu bewerkstelligen, als der Transport der bevölkerten Begattungskasten. Diese Methode ermöglicht es, dass die Bienen nach dem Abfüllen in die Kästchen nicht gestört werden; dies wirkt sich auf die Königin-Annahme positiv aus.

Bei speziellen Bienenkasten (Beobachtungskasten) wo das Einblasen nicht möglich ist, kann man den Behälter einfach zusetzen, und die Bienen rutschen und klettern in die Kasten hinein, wenn man das Sperrnetz vom Behälter entfernt, und an seiner Stelle einen Schaumgummikolben Fig.16, dessen Vorderseite 33 plastifiziert ist, einsetzt. Danach drückt man die Bienen ganz vorne zusammen, (dies wird durch ihre elastischen Körper ermöglicht.) Wegen Platz -und Luftmangel strömen und rutschen sie noch schneller in das Begattungskästchen hinein. Nach der Bevölkerung kann man die Königin mit der Zusetzröhre Fig.5 gleich zusetzen.

Aussieben von Drohnen.

Werden die Begattungskasten in der Belegstation -oder Belegstelle aufgestellt, dürfen keine Drohnen in die Begattungskasten gelangen, weil die Reinzucht dadurch gefährdet wäre.
Da die Drohnen wesentlich grösser sind als die Arbeiterinnen,
sich von denselben gut unterscheiden, kann man erreichen, dass
nur ganz wenig Drohnen eingesaugt werden. Die Bienen werden
mit Hilfe des Drohnen-Siebes Fig.21 oder Fig.22, zugesetzt,der
Behälter wird einfach mit der grösseren Oeffnung in das Drohnen-Sieb eingesetzt. Wenn das Begattungskästchen eine grössere
Oeffnung hat, wird Das Drohnen-Sieb Fig.21 angewendet, wenn nur
ein Königin-Zusetzloch vorhanden ist, wird das Drohnen-Sieb Fig.
22 verwendet.
Die betreffenden Drohnen-Siebe weisen ein Rundstab-Drohnen-Absperrgitter 35 auf, welches grösser ist als das Königin-Absperrgitter. So können die Arbeiterinnen schneller eingeblasen werden. Zurück bleiben die wenigen Drohnen 34.


Einfangen eines Schwarmes - oder von Bienen aus einem Kasten
ohne Waben.

Mit Hilfe des Vorsatzes Fig. 14, Fig.15, Fig.17 oder Fig.18,
und wenn nötig mit dem Verlängerungsrohr Fig.13, kann man
Bienen aus einem Schwarm einfangen, und den ganzen Schwarm in
mehrere Behälter aufteilen, oder wenn Saugvorrichtung und Behälter genug gross sind, den ganzen Schwarm einfangen. Mit
Hilfe des Vorsatzes Fig.26, kann man die Bienen aus einem Kasten einsaugen. Der flache Vorsatz wird der Wand entlang geführt; so kann man auch Bienen aus den Ecken einsaugen. Mit
Hilfe der biegsamen Röhre Fig.10, kann man noch leichter arbeiten.
Auch zum Einsaugen von toten Bienen ist es gut zu gebrauchen,
( Krankheits -Rassenuntersuchungen.)


Einfangen und Handhabung von Drohnen.

In den Behälter wird ein Drohnenabsperrgitter Fig.20 und anschliessend ein Sperrnetz Fig.3 eingesetzt. Von den Drohnenwaben werden Drohnen eingesaugt. Das Sperrnetz wegnehmen, und
die wenigen Arbeiterbienen austreiben -oder ausfliegen lassen,
zurück bleiben nur die Drohnen.

## Pflege der Königinnen nach dem Ausschlüpfen – und gleich nach der künstlichen Besamung.

Der rechteckige Behälter Fig.8 passt gut in den durchsichtigen Vorsatz Fig.7, welcher seinerseits in die Saugvorrichtung Fig.1 hineinpasst; so kann man die Bienen einsaugen. Die ausgeschlüpften Königinnen werden dem Brutschrank oder dem Kasten entnommen, und mit der verstopften Plasticröhre 41 zugesetzt. Die Königin muss nach der Besamung unbedingt durch die Bienen gepflegt werden.

Der obere Deckel weist zwei Löcher auf; eines dient dem Königinzusetzen, das andere der Fütterung. Ein Fütterungsrohr 42 wird eingehängt, mit Honigwasser gefüllt, und oben luftdicht abgeschlossen 43. Das Rohr ist aussen leicht aufgerauht, damit die Bienen leichter an die untere Oeffnung 44 gelangen können zur Futterentnahme. Mit Flüssigfutter und Frischluft versehen, können die Bienen mehrere Tage in einem geeigneten Raum aufbewahrt werden, bis die Königin verwendet wird. Die Behälter können eng nebeneinander gestapelt werden, damit die Bienen falls nötig, sich gegenseitig wärmen können.

Bei der künstlichen Besamung wird die Königin einfach herausgenommen, und nach der Besamung wieder zugesetzt. Mit Hilfe des Königinabsperrgitters 45 kann man die Bienen austreiben; zurückbleiben die Königin und vielleicht allfällige Drohnen.

## Abfüllen einiger bzw. einzelner Bienen.

Oft ist es erwünscht nur einige Bienen in einen Okkulierkäfig, oder sogar nur je eine Einzelne in ein Zeichnungsrohr oder ein Reagenzglas (zwecks Untersuchung) abzufüllen. Mit Hilfe der Verlängerung Fig.19 ist es möglich, Bienen einzeln in einen Behälter abzufüllen. Die Röhre wird an den Behälter angesteckt, und mit Hilfe des Schaumstoffkolbens werden die Bienen zusammengerückt. So ordnen sie sich im Rohr hintereinander ein. Die Innenfläche des Rohres ist sehr glatt. Das Rohr verjüngt sich im unteren Teil derart, dass nur jeweils eine Biene auf's Mal hindurchgelangen kann.

Das Ende der Röhre richtet sich nach der jeweiligen Grösse der Insekten. Die Bienen rutschen automatisch nach unten, und fallen wie Wassertropfen in die in Reihen aufgestellten Käfige, Zeichnungsröhren oder Reagenzgläser. Mit dem Zeigefinger kann man die gewünschte Anzahl Bienen dosieren. Beim hantieren mit stechenden Insekten, wird der Zeigefinger mit einem glatten Plastichäubchen geschützt.

## Ausfangen der Königin mit oder ohne Begleitbienen.

Mit der handlichen, pistolenförmigen Vorrichtung Fig.6, kann man einzelne Bienen, Insekten, Königinnen -mit oder ohne Begleitbienen- einfangen, und in die gewünschten Käfige einblasen.

Für das Königin-Zusetzen wird eine perforierte Plasticröhre Fig.5, deren Ende verstopft ist, angesteckt, und die Königin wird eingesaugt. Mit dem grösseren Stopfen 46 wird die Röhre verstopft, das andere Ende geöffnet, und mit Futterteig verstopft. Damit ist sie für das Zusetzen bereit.

Für den Versand werden auch Begleitbienen eingesaugt.

Die Röhre ist vorne am Hals beschriftbar. (Rasse, Kastennummer usw.)

Die Vorrichtung funktioniert mit Batterie.

Auf diese Weise kann jeder Imker den Apparat stets bei sich haben, und wenn nötig schon während der Kontrolle einsetzen.

Einfangen von Bienen direkt in die Begattungskästchen. Fig.9 Fig.11

Das Begattungskästchen Fig.9 ist rechteckig, und eine Seitenwand 51 ist aus durchsichtigem Plastic. Diese Seitenwand ist nach Lösen der vier Winkelschrauben 52 abnehmbar. Andere Teile des Kästchens sind aus Holz. Unter den vier Winkelschrauben 52 ist je ein Rund 53 ausgefräst. So kann man das Kästchen in die Saugvorrichtung 65 passend einstecken; die Schrauben sind nicht vorstehend. Fig.12a  Fig.12b

Das Kästchen weist vorne eine kleine Oeffnung auf 54; für das Einsaugen der Bienen. Hinten ist eine grössere Oeffnung 55, mit Sperrnetz 56 abgeschlossen. Der Futterbehälter 57 ist unter der Querleiste 58 so befestigt, dass er nicht wegrutschen kann; auch nicht bei Umkippen des Kästchens.

Die Bienen erreichen das Futter durch die kleine Oeffnung 59 an der Querleiste. Der Deckel hat eine Oeffnung 60, und unter dem Deckel befindet sich ein ausklappbares Rähmchen 61, welches ebenfalls eine kleine Oeffnung 62 aufweist.

Das Rähmchen 61 ist vorne mit einer Schraube so befestigt, dass es leicht ausklappbar ist für das Ausfangen der Königin. Die durchsichtige Wand ermöglicht eine schnelle Brutkontrolle, ohne dass das Kästchen geöffnet werden muss. Am anderen Ende des Rähmchens dienen zwei Nägel 65 als Distanzhalter, und verhindern, dass das Rähmchen zwischen den Seitenwänden hin und her bewegt. Vorne wird ein passender Plasticdeckel 66 in die Nocken 67 eingehängt, damit die Begattungskästchen während der Arbeit nicht herausrutschen. Das biegsame Saugrohr Fig.10 wird in die kleine Oeffnung gesteckt, mit dem gewünschten Vorsatz versehen, und die Bienen werden eingesaugt. Die Saugkraft ist regulierbar.

Die eingesaugte Menge ist gut sichtbar. Der biegsame PVC-Schlauch 68 ist mit einer passenden flexiblen Metallröhre 69 eingefasst, und dadurch sehr einfach und leicht zu biegen. So kann man die Arbeit gut ausführen, weil man mit Hilfe des Schlauches überall hingelangen kann. Er ist auch gut anwendbar bei den Zwischenbehältern.

Nach einsaugen der Bienen kann man die Königin zusetzen, und wie beim kleinen Begattungskästchen üblich, in den Kellerarrest bringen, und nachher mit einer Schutzhülle versehen einzeln oder zu zweit, damit sie sich gegenseitig wärmen, im Freien aufstellen.

Werden die Begattungskasten in der Belegstation aufgestellt,
muss man Bienen aus einem drohnenfreien Volk einfangen, oder
am kleinen Flugloch ein Rundstab-Drohnenabsperrgitter 70 anbringen. Dieses verhindert das Ausfliegen der Drohnen, nicht
aber das Ausfliegen zur Begattung der Königin.
Der Apparat funktioniert mit 12 Volt.

Man kann mit einem längeren angeschlossenen durchsichtigen
PVC-Schlauch der eine glatte Innenfläche aufweist, noch bequemer arbeiten.
Die Saugvorrichtung liegt auf dem Boden oder auf dem Tisch,
und mit dem in den Schlauch eingesteckten Griff und Vorsatz
kann man mit noch mehr Gefühl arbeiten, und muss sich körperlich weniger anstrengen Fig.25.

84810191.1

0129504

Patentansprüche

1. Verfahren zum Einfangen und Austreiben von Hautflügler-Insekten, insbesondere Bienen, in bzw. aus einem Behälter mit Hilfe eines motorisch angetriebenen Gebläses, dadurch gekennzeichnet, dass ein Behälter verwendet wird, der einerends eine enge und anderends eine weite Durchtrittsöffnung hat, und dass zum Austreiben der Insekten der Gebläsemotor umgeschaltet wird.

2. Einrichtung zur Durchführung des Verfahrens nach dem P.a. 1 gekennzeichnet durch ein Gebläse, mit umschaltbarem Motor und saugseitig einem weiten und druckseitig einem engen Anschluss-Stutzen, und durch einen Behälter der mit seiner weiten Durchtrittsöffnung an die Saugseite des Gebläses oder mit seiner engen Oeffnung an die Druckseite des Gebläses anschliessbar ist, und in dessen weite Durchtrittsöffnung ein auswechselbares Sperrgitter eingesetzt ist.

3. Einrichtung nach dem P.a. 2 dadurch gekennzeichnet, dass der weite Anschluss-Stutzen des Gebläses durchsichtig ist.

4. Einrichtung nach dem P.a. 2 dadurch gekennzeichnet, dass die Gebläseleistung regulierbar ist.

5. Einrichtung nach dem P.a. 2 dadurch gekennzeichnet, dass der dem Transport und der Zwischenlagerung dienende Behälter einen allenähnlichen Uebergang vom weiten zum engen Durchmesser hat, und eine glatte Innenfläche und eine beschreibbare Aussenfläche aufweist.

6. Einrichtung nach dem P.a. 2 dadurch gekennzeichnet, dass Sperrgitter mit verschiedener Maschenweite vorgesehen sind, die gegebenenfalls auch zwei übereinander in die weite Behälteröffnung mittels Klemm- oder Einschnappritze einsetzbar sind.

7. Einrichtung nach P.a. 2 dadurch gekennzeichnet, dass der Zwischenbehälter quaderig ist, einen abnehmbaren Deckel hat, welcher eine Oeffnung für das Königinzusetzen, und eine Oeffnung für die Fütterung aufweist.

8. Einrichtung nach P.a. 2 dadurch gekennzeichnet, dass in das Rohr der kleinen handlichen pistolenförmigen Vorrichtung eine perforierte Plasticröhre einsteckbar ist, deren Ende verstopft ist, und zum Einfangen und Zusetzen und dem Versand der Königin dient - gegebenenfalls mit Begleitbienen.

9. Einrichtung nach P.a. 2 dadurch gekennzeichnet, dass der Anschluss-Stutzen quaderig ist, und anstelle eines Zwischenbehälters ein passendes Begattungskästli eingesteckt wird, dessen mindestens eine Seite aus durchsichtigem Plastic ist, vorne eine kleine Oeffnung zum Einsaugen der Bienen und hinten eine mit Sperrnetz abgeschlossene grössere Oeffnung aufweist.

Fig 2

Fig 1

Fig 3

Fig 4

Fig 5

Fig 6

Fig 7

Fig 8

Fig 9

Fig 10

Fig 11

Fig 12a

Fig 12b

Fig 13

Fig 14

Fig 15

Fig 16

Fig 17

Fig 18

Fig 19

Fig 20

Fig 21

Fig 22

Fig 26

Fig 23

Fig 24

Fig 25

0129504

Nummer der Anmeldung

**Europäisches Patentamt**

**EUROPÄISCHER RECHERCHENBERICHT**

EP 84 81 0191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 829 384 (A.A. STUDLER) * Anspruch 1; Spalte 1, Zeile 70 - Spalte 3, Zeile 49; Figur 2 * | 1,6,7 | A 01 K 57/00 A 01 M 1/06 |
| A | CH-A- 251 309 (M. MEIER-KÜNZLI) * Vollständiges Dokument * | 1,3,4, 6 | |
| A | US-A-4 074 458 (R.E. CATLETT) ----- | | |

| | RECHERCHIERTE SACHGEBIETE (Int. Cl. ³) |
|---|---|
| | A 01 K 55/00 A 01 K 57/00 A 01 M 1/00 |

Der vorliegende Recherchenbericht wurde für alle Patentansprüche erstellt.

| Recherchenort | Abschlußdatum der Recherche | Prüfer |
|---|---|---|
| BERLIN | 17-07-1984 | BERGZOLL M C |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82